# FASCICULE DE BREVET EUROPEEN

(11) **EP 2 129 878 B1**
(45) Date de publication et mention de la délivrance du brevet: **02.09.2015**
(21) Numéro de dépôt: 08788123.1
(22) Date de dépôt: 03.04.2008
(51) Int. Cl.: F01D 25/24, F02K 1/80

(54) **PROCEDE D'ASSEMBLAGE DE DEUX PIECES BOUT A BOUT AYANT DES COEFFICIENTS DE DILATATION DIFFERENTS ET ASSEMBLAGE AINSI OBTENU**
VORRICHTUNG UND METHODE ZUR VERBINDUNG VON BAUTEILEN MIT UNTERSCHIEDLICHEN THERMISCHEN AUSDEHNUNGSKOEFFIZIENTEN.
METHOD FOR ASSEMBLING END TO END TWO PARTS HAVING DIFFERENT THERMAL EXPANSION COEFFICIENTS AND ASSEMBLY THUS OBTAINED

(30) Priorité: 05.04.2007 FR 0754317
(43) Date de publication de la demande: 09.12.2009
(73) Titulaire: HERAKLES, 33185 Le Haillan (FR)
(72) Inventeur: CONETE, Eric, F-33700 Merignac (FR)
(74) Mandataire: Delumeau, François Guy
(86) Numéro de dépôt international: PCT/FR2008/050600
(87) Numéro de publication internationale: WO 2008/139095

(56) Documents cités:
- EP-A- 1 152 191
- US-A1- 2005 005 608
- US-A1- 2006 032 237

## Description

### Arrière-plan de l'invention

La présente invention concerne l'assemblage bout à bout de deux pièces avec recouvrement au niveau de parties de bords respectives, les pièces étant en des matériaux ayant des coefficients de dilatation respectifs différents l'un de l'autre.

Un domaine d'application de l'invention est l'assemblage de pièces dans des sous-ensembles de turbines à gaz, notamment de turbines à gaz aéronautiques, plus particulièrement, mais non exclusivement, de deux pièces réalisées respectivement en un matériau métallique et en un matériau composite à matrice céramique (ou CMC). Des exemples de tels assemblages sont un ensemble formé par une tuyère secondaire amont et une tuyère secondaire aval dans un moteur aéronautique ou un ensemble formé par un fond de chambre de combustion et une paroi de chambre interne ou externe dans une turbine à gaz.

Pour assembler des pièces en des matériaux ayant des coefficients de dilatation sensiblement différents, il est connu de faire appel à des liaisons souples capables par déformation élastique d'absorber les différences entre variations dimensionnelles. Ainsi, il est bien connu d'utiliser des liaisons souples pour relier des parois de chambre de combustion en CMC à des carters métalliques dans une turbine à gaz. On pourra se référer notamment au document US 2006/0032237.

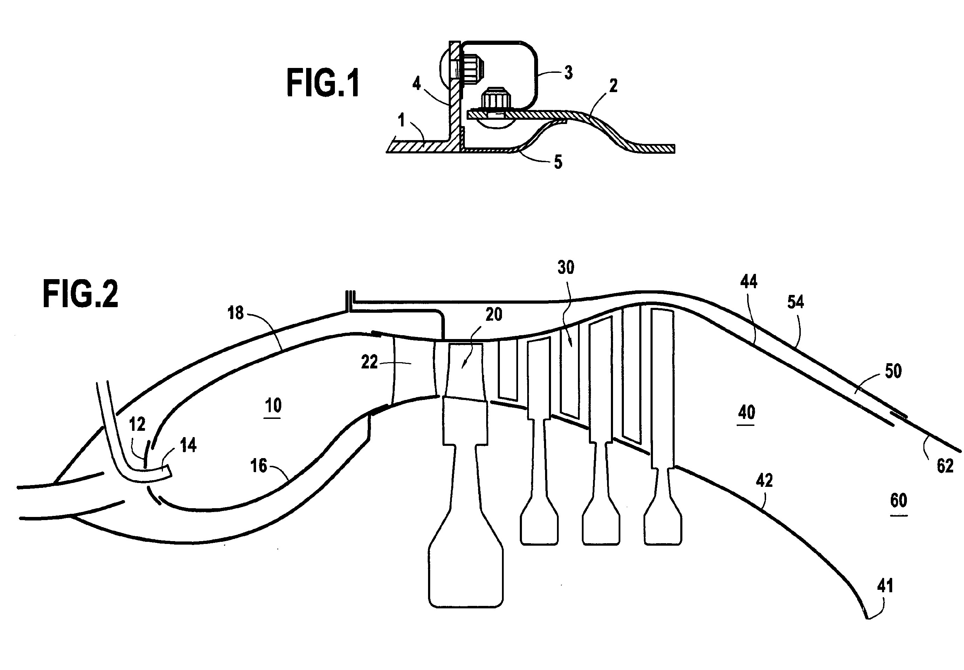

La figure 1 montre partiellement et schématiquement l'utilisation de telles liaisons souples pour assembler une tuyère secondaire amont métallique 1 avec une tuyère secondaire aval en CMC 2 en sortie d'un moteur aéronautique à turbine à gaz (les termes amont et aval sont utilisés ici en référence à la direction d'écoulement du flux gazeux dans le moteur).

Les liaisons souples sont matérialisées par des pattes de liaison métalliques 3 qui sont recourbées de manière à être élastiquement déformables. A une extrémité, chaque patte de liaison 3 est fixée par exemple par boulonnage à une bride 4 solidaire de la tuyère secondaire amont 1, au voisinage de son bord d'extrémité aval. A l'autre extrémité, chaque patte 3 est fixée par exemple par boulonnage sur la paroi de la tuyère secondaire aval 2, au voisinage de son bord d'extrémité amont. Un jeu étant présent entre les parties de bords annulaires adjacentes des tuyères 1, 2, l'étanchéité est assurée par un dispositif d'étanchéité 5 tel qu'un joint métallique fendu à pétales fixé à l'extrémité aval de la tuyère 1.

L'utilisation de pattes de liaison implique un certain nombre de manipulations et de réglages lors du montage. En outre, la présence des pattes de liaison et d'une bride et la nécessité d'un dispositif d'étanchéité se traduisent par une augmentation de masse et de coût de production.

Le document EP 1 152 191 décrit une chambre de combustion ayant une paroi en matériau composite à matrice céramique.

### Objet et résumé de l'invention

L'invention a pour but de fournir un procédé d'assemblage permettant d'éviter de tels inconvénients et propose à cet effet un procédé d'assemblage bout à bout d'une première pièce et d'une deuxième pièce au niveau de parties de bords respectives sensiblement annulaires, les pièces étant en des matériaux respectifs ayant des coefficients de dilatation thermique différents l'un de l'autre, procédé selon lequel :
- on confère à une partie de bord de la première pièce une épaisseur plus faible par rapport au reste de la pièce ;
- on forme dans la partie de bord d'épaisseur plus faible de la première pièce une succession de languettes souples séparées les unes des autres par des fentes obtenues directement par découpe ou usinage ;
- on engage les parties de bord des deux pièces l'une dans l'autre sur une distance au moins égale à la longueur totale des fentes ; et
- on assemble les deux pièces au moyen d'éléments de liaison reliant chacun une languette de la partie de bord de la première pièce à la partie de bord de la deuxième pièce ;
- les parties de bord des deux pièces étant engagées l'une dans l'autre de manière à ce que les parties de bord soient sensiblement en contact mutuel aux températures élevées normalement rencontrées en service.

Ainsi, l'invention est remarquable en ce que la fonction de liaisons souples est intégrée directement à l'une des pièces et en ce que l'engagement mutuel des pièces permet d'obtenir directement un raccordement sensiblement étanche aux températures élevées rencontrées en service, d'où une simplification importante de l'assemblage.

Un autre avantage des languettes est qu'elles permettent de compenser d'éventuels défauts ou irrégularités de forme au niveau des parties de bord assemblées, notamment lorsque ces dernières sont des parties annulaires de diamètre relativement important.

Avantageusement, les languettes sont formées dans la partie de bord de la pièce dont le matériau a le coefficient de dilatation le plus élevé et présente une capacité de déformation élastique.

La première pièce peut être en métal et la deuxième pièce en matériau composite à matrice céramique.

Selon un mode de réalisation, la partie de bord de la première pièce est engagée sur la partie de bord de la deuxième pièce sans jeu et avec précontrainte à froid.

Selon un autre mode de réalisation préféré, la partie de bord de la deuxième pièce est engagée sur la partie de bord de la première pièce avec jeu à froid. Dans ce dernier cas, de préférence, la liaison entre une languette de la partie de bord de la première pièce et la partie de bord de la deuxième pièce est assurée de manière à appliquer à froid la languette localement contre la partie de bord de la deuxième pièce par déformation élastique de la languette.

L'invention vise aussi un assemblage tel qu'il peut être obtenu par le procédé, à savoir un assemblage comprenant une première pièce et une deuxième pièce disposées bout à bout et reliées l'une à l'autre au niveau de parties de bord respectives sensiblement annulaires, les pièces étant en des matériaux respectifs ayant des coefficients de dilatation thermique différents l'un de l'autre, assemblage dans lequel :
- la première pièce a une partie de bord ayant une épaisseur plus faible par rapport au reste de la première pièce et présentant une succession de languettes souples séparées par des fentes et formées intégralement avec la première pièce ;
- les parties de bord des pièces sont engagées l'une dans l'autre sur une distance au moins égale à la longueur totale des fentes ; et
- des éléments de liaison relient chacun une languette de la partie de bord de la première pièce à la partie de bord de la deuxième pièce ;
- les parties de bord des pièces étant engagées l'une dans l'autre de manière à ce que les parties de bord soient sensiblement en contact mutuel aux températures élevées normalement rencontrées en service.

Un tel assemblage peut constituer une structure de paroi d'un sous-ensemble de turbine à gaz. En particulier, la première et la deuxième pièce peuvent constituer respectivement une partie de paroi amont et une partie de paroi aval d'une tuyère secondaire de moteur aéronautique à turbine à gaz.

### Brève description des dessins

L'invention sera mieux comprise à la lecture de la description faite ci-après, à titre indicatif mais non limitatif, en référence aux dessins annexés sur lesquels :
- la figure 1, déjà décrite, est une vue partielle en coupe qui montre très schématiquement un mode d'assemblage par liaisons souples de type connu ;
- la figure 2 est une vue très schématique en demi-coupe axiale montrant des éléments d'un moteur aéronautique à turbine à gaz ;
- la figure 3 est une vue schématique d'une tuyère secondaire de moteur aéronautique à turbine à gaz avec des parties amont et aval assemblées conformément à un mode de réalisation de l'invention ;
- la figure 4 est une vue à échelle agrandie d'un détail de la figure 3 ;
- la figure 5 est une vue en coupe selon le plan V-V de la figure 4 ;
- la figure 6 est une vue schématique d'une tuyère secondaire de moteur aéronautique à turbine à gaz avec des parties amont et aval assemblées conformément à un autre mode de réalisation de l'invention ;
- la figure 7 est une vue à échelle agrandie d'un détail de la figure 6 ; et
- la figure 8 est une vue en coupe selon le plan VIII-VIII de la figure 7.

### Description détaillée de modes de réalisation

Un domaine particulier d'application de l'invention est celui des turbines à gaz, en particulier pour moteur aéronautique tel que, notamment celui montré partiellement et très schématiquement par la figure 2.

Dans le sens d'écoulement du flux gazeux, la figure 2 montre une chambre de combustion 10, une turbine haute-pression (HP) 20 avec un distributeur 22 d'entrée de turbine interposé entre la chambre 10 et la turbine HP 20, une turbine basse-pression (BP) 30 et une tuyère.

La chambre de combustion a une paroi de fond 12, où sont logés des injecteurs 14, et des parois interne 16 et externe 18 auxquelles la paroi de fond 12 est reliée. A leurs extrémités aval, les parois 16, 18 sont reliées aux plates-formes interne et externe du distributeur.

La tuyère de canalisation du flux en aval de la turbine BP comprend ici une tuyère primaire 40 et une tuyère secondaire, cette dernière étant formée d'une partie amont ou tuyère secondaire amont 50 et d'une partie aval ou tuyère secondaire aval 60, qui prolonge la tuyère primaire 40 et la tuyère secondaire amont 50 vers l'aval.

La tuyère primaire 40 est à section annulaire et est délimitée par une paroi interne 42 et une paroi externe 44. La paroi interne 42 se termine par un cône de sortie ou cône d'échappement 41. La tuyère primaire 40 canalise le flux primaire ou flux « chaud » issu de la turbine BP 30.

La tuyère secondaire amont 50 est délimitée par une paroi externe rigide 54 qui entoure la paroi 44 et délimite avec celle-ci un espace annulaire dans lequel circule un flux secondaire ou flux « froid » issu d'une soufflante (non représentée) en entrée du moteur, contournant la chambre de combustion et ayant notamment une fonction de flux de refroidissement. Ainsi, la paroi externe 44 de la tuyère primaire est refroidie par de l'air circulant dans la tuyère secondaire amont. La paroi externe 54 de cette dernière est raccordée à sa partie d'extrémité aval à une paroi annulaire rigide 62 délimitant la tuyère secondaire aval 60.

La paroi externe 44 de la tuyère primaire 40 est en un matériau métallique réfractaire, par exemple en « Inconel », tandis que la paroi externe 54 de la tuyère secondaire amont 50 est typiquement en titane ou en alliage de titane.

La paroi 62 de la tuyère secondaire aval 60 peut avantageusement être en matériau composite à matrice céramique (CMC) dont la tenue aux températures élevées permet de supporter sans dommages la température du flux gazeux chaud à ce niveau de la tuyère d'échappement, sans refroidissement actif du côté externe. On note que l'air « froid » s'échappant de l'espace entre les parois 44 et 54 peut contribuer à la formation d'un film protecteur d'air frais à la partie amont de la surface intérieure de la paroi 62.

L'utilisation de composite CMC pour la tuyère secondaire aval 60 permet donc de limiter les besoins globaux en air de refroidissement et d'avoir une structure simple de la tuyère secondaire aval, tout en réduisant de façon sensible la masse par rapport à un matériau métallique.

Les matériaux CMC sont en effet remarquables par leurs propriétés thermostructurales et par leur capacité à conserver ces propriétés aux températures élevées. Ils sont formés par un renfort fibreux en fibres réfractaires (carbone ou céramique) qui est densifié par une matrice céramique, notamment carbure, nitrure, oxyde réfractaire,.... Des exemples typiques de matériaux CMC sont les matériaux C-SiC (renfort en fibres de carbone et matrice en carbure de silicium), les matériaux SiC-SiC et les matériaux C-C/SiC (matrice mixte carbone/carbure de silicium). La fabrication de pièces en composite CMC est bien connue. La densification du renfort fibreux peut être réalisée par voie liquide (imprégnation par une résine précurseur de la matrice céramique et transformation en céramique par réticulation et pyrolyse, le processus pouvant être répété) ou par voie gazeuse (infiltration chimique en phase vapeur).

Les matériaux CMC ayant un coefficient de dilatation différent de celui des matériaux métalliques, généralement sensiblement inférieur, il est nécessaire que la liaison entre les parois 54 et 62 présente la souplesse nécessaire pour compenser les différences de variations dimensionnelles d'origine thermique entre les pièces reliées entre elles, sans endommagement de celles-ci et de la liaison, tout en assurant un raccordement sensiblement étanche entre les parties amont et aval de la tuyère secondaire.

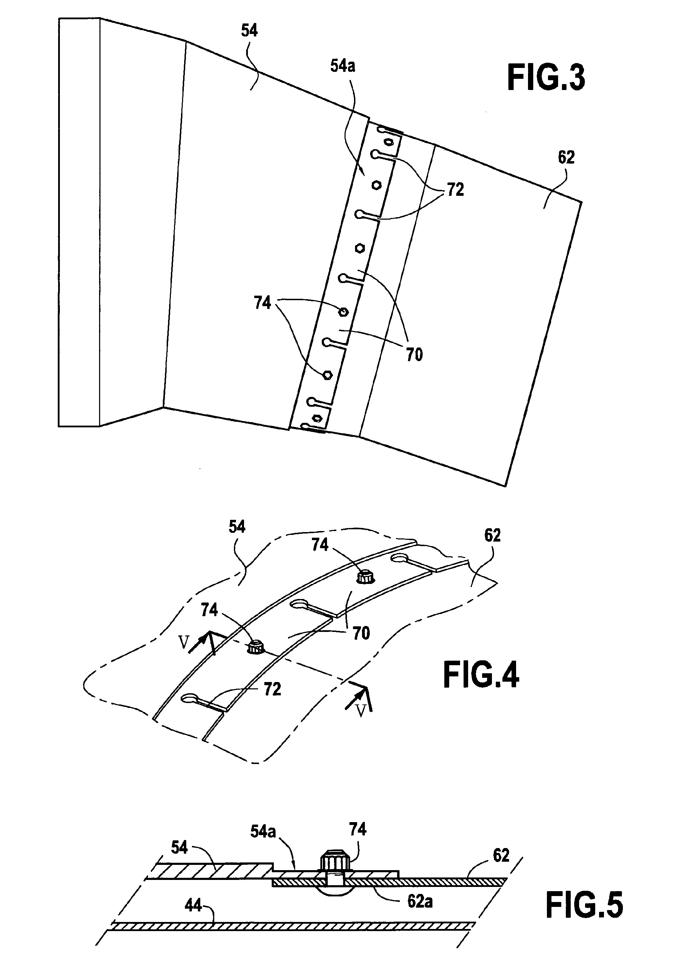

Dans le mode de réalisation des figures 3 à 5, la partie de bord annulaire aval 54a de la paroi 54 de tuyère secondaire amont et la partie de bord annulaire amont 62a de la paroi 62 de tuyère secondaire aval 60 sont engagées mutuellement, la partie de bord 54a entourant la partie de bord 62a.

La partie de bord 54a présente une épaisseur plus faible par rapport au reste de la paroi 54 qui conserve une fonction structurale et des languettes 70 sont formées dans la partie de bord 54a, séparées par des fentes 72. Les languettes sont obtenues directement par découpe ou usinage des fentes 72 dans le matériau métallique de la paroi 54. Les languettes 70 et fentes 72 s'étendent en direction sensiblement axiale à partir de l'extrémité aval de la partie de bord 54a, les fentes se terminant par un évidement arrondi pour éviter la concentration de contraintes au fond des fentes.

Les parois 54 et 62 sont assemblées par boulonnage, les têtes des boulons 74 s'appuyant sur la face intérieure de la paroi 62. La fixation par boulon est réalisée au niveau de chaque languette 70, dans une partie centrale de celle-ci, ou au moins au niveau de certaines des languettes. Une fixation par rivetage pourrait aussi être envisagée.

Dans le mode de réalisation des figures 3 à 5, les parties de bords annulaires 62a 54a sont engagées l'une dans l'autre sans jeu et avec précontrainte à froid de manière à ce qu'un contact mutuel soit maintenu aux températures élevées rencontrées normalement en service. Le montage avec précontrainte peut être réalisé de façon en soi bien connue en chauffant la paroi métallique 54 avant d'engager la partie de bord 54a sur la partie de bord 62a. En faisant en sorte que la partie de bord annulaire 62a soit engagée dans la partie de bord annulaire 54a sur une distance au moins égale à la longueur des fentes 72, une étanchéité est alors sensiblement assurée en service au niveau de la liaison entre les tuyères secondaires amont et aval.

L'épaisseur plus faible de la partie de bord 54a est choisie pour obtenir des languettes 70 souples dont le domaine de déformation élastique est tel qu'il permet de réaliser l'assemblage avec précontrainte et de « suivre » les dilatations différentielles entre les pièces assemblées, en association avec les fentes 72. Les languettes 70 permettent également de compenser des défauts ou irrégularités de forme au niveau des parties de bord assemblées. La capacité de déformation élastique des matériaux métalliques étant généralement supérieure à celle des matériaux CMC, il est préférable de former les languettes dans la pièce en matériau métallique. Toutefois, la formation des languettes dans la pièce en matériau CMC n'est pas exclue dans la mesure où ce matériau présente une capacité suffisante de déformation élastique.

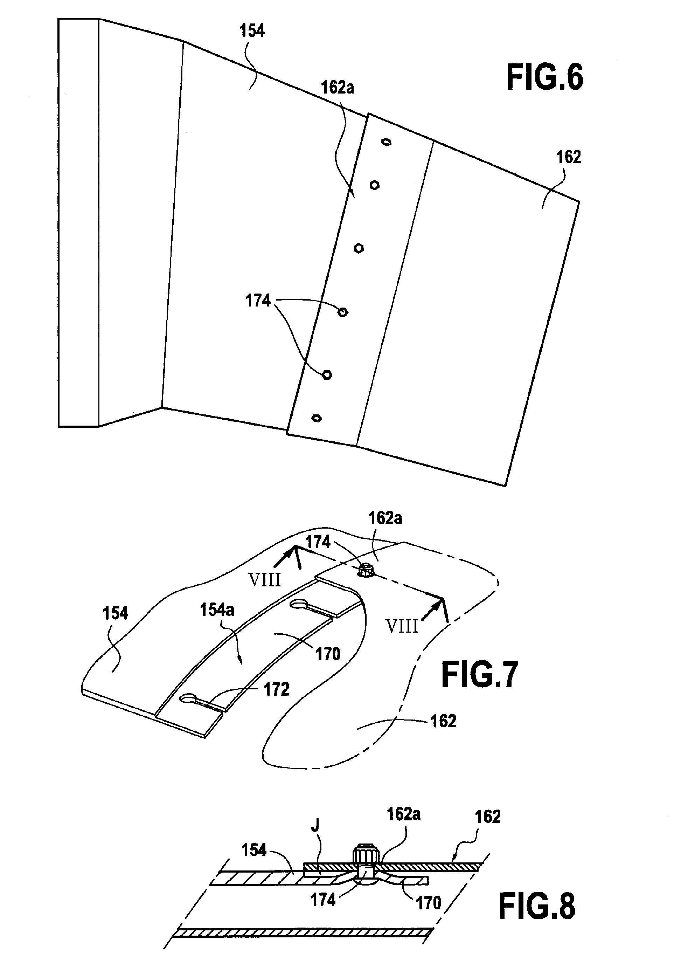

Dans le mode de réalisation préféré des figures 6 à 8, la partie de bord annulaire aval 154a de la paroi 154 de tuyère secondaire amont et la partie de bord annulaire amont 162a de la paroi 162 de tuyère secondaire aval sont engagées mutuellement, la partie de bord 162a entourant la partie de bord 154a.

Comme dans le mode de réalisation des figures 3 à 5, la partie de bord 154a présente une épaisseur plus faible par rapport au reste de la paroi 154 et des languettes 170 sont formées dans la partie de bord 154a. Les languettes 170 sont obtenues directement par découpe ou usinage de fentes 172 dans le matériau métallique de la paroi 154. Les languettes 170 et fentes 172 s'étendent sensiblement en direction axiale à partir de l'extrémité aval de la partie de bord 154a. L'épaisseur réduite de la partie de bord 154a permet de former des languettes 170 souples présentant une bonne capacité de déformation élastique.

Les parties de bord annulaires 154a, 162a sont engagées l'une dans l'autre avec un jeu J à froid (figure 8). Le jeu J est choisi de sorte qu'aux températures élevées rencontrées normalement en service, la partie de bord 154a se plaque contre la partie de bord 162a, éventuellement avec une légère contrainte. Dans l'application envisagée, le jeu J est typiquement de quelques dixièmes de mm. En faisant en sorte que la partie de bord 162a soit engagée sur la partie de bord 154a sur une distance au moins égale à la longueur des fentes 172, une étanchéité est alors sensiblement assurée en service au niveau de la liaison entre les tuyères secondaires amont et aval. La présence du jeu J ainsi que des fentes 172 permet une compensation des différences de variations dimensionnelles d'origine thermique.

Les parois 154 et 162 sont assemblées par boulonnage, les têtes des boulons 174 s'appuyant sur la face intérieure de la paroi 154. La fixation par boulon est réalisée au niveau de chaque languette 170, dans une partie centrale de celle-ci ou au moins au niveau de certaines des languettes. Une fixation par rivetage pourrait aussi être envisagée. Comme le montre la figure 8, la liaison par boulon est réalisée avec un serrage suffisant pour appliquer localement la languette 170 contre la face intérieure de la partie de bord 162a grâce à la capacité de déformation élastique des languettes 170. Ainsi, une reprise de serrage à chaud n'est pas nécessaire, les boulons étant avantageusement associés à des écrous auto-bloquants.

On notera que la capacité de déformation élastique permet aussi de compenser des défauts ou irrégularités de forme au niveau des parties de bord assemblées.

Le mode d'assemblage décrit entre les tuyères secondaires amont et aval peut être appliqué pour assembler d'autres pièces dans un moteur à turbine à gaz tel qu'illustré par la figure 2.

Par exemple, un tel assemblage peut être envisagé entre le fond de chambre 12 en matériau métallique et l'une et/ou l'autre des parois de chambre interne et externe 16, 18 en matériau CMC.

## Revendications

1. Procédé d'assemblage bout à bout d'une première pièce (50) et d'une deuxième pièce (60) au niveau de parties de bords respectives (54a, 62a) sensiblement annulaires, les pièces étant en des matériaux respectifs ayant des coefficients de dilatation thermique différents l'un de l'autre, procédé selon lequel :
- on forme dans la première pièce (50) une succession de languettes souples (70) séparées les unes des autres par des fentes (72) obtenues directement par découpe ou usinage ; et
- les parties de bord (54a, 62a) deux pièces (50, 60) étant engagées l'une dans l'autre de manière à ce que les parties de bord soient sensiblement en contact mutuel aux températures élevées normalement rencontrées en service,
**caractérisé en ce que** l'on confère à une partie de bord (54a) de la première pièce (50) une épaisseur plus faible par rapport au reste de la pièce, et **en ce que** l'on engage les parties de bord (54a, 62a) des deux pièces (50, 60) l'une dans l'autre sur une distance au moins égale à la longueur totale des fentes (72), on assemble les deux pièces (50, 60) au moyen d'éléments de liaison reliant chacun une languette (70) de la partie de bord (54a) de la première pièce (50) à la partie de bord (62a) de la deuxième pièce (60).

2. Procédé selon la revendication 1, dans lequel les languettes (70) sont formées dans la partie de bord (54a) de la pièce (50) dont le matériau a le coefficient de dilatation thermique le plus élevé et présente une capacité de déformation élastique.

3. Procédé selon la revendication 1, dans lequel la première pièce 50 est en métal et la deuxième pièce 60 est en matériau composite à matrice céramique.

4. Procédé selon l'une quelconque des revendications 1 à 3, dans lequel la partie de bord (54a) de la première pièce 50 est engagée sur la partie de bord (62a) de la deuxième pièce (60) sans jeu et avec précontrainte à froid.

5. Procédé selon l'une quelconque des revendications 1 à 3, dans lequel la partie de bord 162a de la deuxième pièce (160) est engagée sur la partie de bord 154a de la première pièce (150) avec jeu (J) à froid.

6. Procédé selon la revendication 5, dans lequel la liaison entre une languette (170) de la partie de bord (154a) de la première pièce (150) et la partie de bord (162a) de la deuxième pièce (160) est assurée de manière à appliquer à froid la languette (170) localement contre la partie de bord (162a) de la deuxième pièce (160) par déformation élastique de la languette.

7. Assemblage comprenant une première pièce (50) et une deuxième pièce (60) disposées bout à bout et reliées l'une à l'autre au niveau de parties de bord (54a,62a) respectives sensiblement annulaires, les pièces étant en des matériaux respectifs ayant des coefficients de dilatation thermique différents l'un de l'autre, assemblage dans lequel :
- la première pièce (50) présente une succession de languettes souples (70) séparées par des fentes (72) et formées intégralement avec la première pièce (50) ; et
- des éléments de liaison relient chacun une languette (70) de la partie de bord (54a) de la première pièce (50) à la partie de bord (62a) de la deuxième pièce (60) ;
- les parties de bord des pièces (54a, 62a) étant engagées l'une dans l'autre de manière à ce que les parties de bord (54a, 62a) soient sensiblement en contact mutuel aux températures élevées normalement rencontrées en service,
**caractérisé en ce que** la première pièce (50) a une partie de bord ayant une épaisseur plus faible par rapport au reste de la première pièce et **en ce que** les parties de bord (54a, 62a) des pièces (50, 60) sont engagées l'une dans l'autre sur une distance au moins égale à la longueur totale des fentes (70).

8. Assemblage selon la revendication 7, dans lequel les languettes (70) sont formées dans la partie de bord (54a) de la pièce (50) dont le matériau a le coefficient de dilatation thermique le plus élevé et présente une capacité de déformation élastique.

9. Assemblage selon la revendication 7, dans lequel la première pièce (50) est en métal et la deuxième pièce (60) est en matériau composite à matrice céramique.

10. Assemblage selon l'une quelconque des revendications 7 à 9, dans lequel la partie de bord (54a) de la première pièce (50) est engagée sur la partie de bord (62a) de la deuxième pièce (60) sans jeu et avec précontrainte à froid.

11. Assemblage selon l'une quelconque des revendications 7 à 9, dans lequel la partie de bord (162a) de la deuxième pièce (160) est engagée sur la partie de bord (154a) de la première pièce (150) avec jeu (J) à froid.

12. Assemblage selon la revendication 11, dans lequel chaque élément de liaison relie une languette (170) à la partie de bord (162a) de la deuxième pièce (160) avec application locale de la languette (170) contre la partie de bord (162a) de la deuxième pièce (160).

13. Assemblage selon l'une quelconque des revendications 7 à 12, dans lequel la première pièce (50) et la deuxième pièce (60) constituent une structure de paroi d'un sous-ensemble de turbine à gaz.

14. Assemblage selon l'une quelconque des revendications 7 à 12, dans lequel la première pièce (50) et la deuxième pièce (60) constituent respectivement une partie de paroi amont et une partie de paroi aval d'une tuyère secondaire de moteur aéronautique à turbine à gaz.

## Patentansprüche

1. Verfahren zur Stoßverbindung eines ersten Bauteils (50) und eines zweiten Bauteils (60) im Bereich von im Wesentlichen ringförmigen Randabschnitten (54a, 62a), wobei die Bauteile aus jeweiligen Materialien mit zueinander unterschiedlichen thermischen Ausdehnungskoeffizienten sind, wobei gemäß dem Verfahren:
- in dem ersten Bauteil (50) eine Aufeinanderfolge von biegsamen Laschen (70) gebildet wird, die voneinander durch Schlitze (72) getrennt sind, die direkt durch Ausschneiden oder abhebende Bearbeitung erhalten werden, und
- die Randabschnitte (54a, 62a) der beiden Bauteile (50, 60) miteinander in Eingriff stehen, so dass die Randabschnitte im Wesentlichen mit den hohen Temperaturen, die normalerweise während des Betriebs anzutreffen sind, in wechselseitigem Kontakt sind,
**dadurch gekennzeichnet, dass** einem Randabschnitt (54a) des ersten Bauteils (50) eine geringere Dicke in Bezug zum Rest des Bauteils verliehen wird, und dass die Randabschnitte (54a, 62a) der beiden Bauteile (50, 60) miteinander auf einer Distanz mindestens gleich der Gesamtlänge der Schlitze (72) in Eingriff gebracht werden, die beiden Bauteile (50, 60) mit Hilfe von Verbindungselementen zusammengefügt werden, die jeweils eine Lasche (70) des Randabschnitts (54a) des ersten Bauteils (50) mit dem Randabschnitt (62a) des zweiten Bauteils (60) verbinden.

2. Verfahren nach Anspruch 1, bei dem die Laschen (70) in dem Randabschnitt (54a) des Bauteils (50) ausgebildet sind, dessen Material den höchsten thermischen Ausdehnungskoeffizienten hat und eine elastische Verformungsfähigkeit aufweist.

3. Verfahren nach Anspruch 1, bei dem das erste Bauteil (50) aus Metall und das zweite Bauteil (60) aus einem Verbundstoff mit Keramikmatrix ist.

4. Verfahren nach einem der Ansprüche 1 bis 3, bei dem der Randabschnitt (54a) des ersten Bauteils (50) mit dem Randabschnitt (62a) des zweiten Bauteils (60) ohne Spiel und mit Vorspannung im kalten Zustand in Eingriff steht.

5. Verfahren nach einem der Ansprüche 1 bis 3, bei dem der Randabschnitt (162a) des zweiten Bauteils (160) mit dem Randabschnitt (154a) des ersten Bauteils (150) mit einem Spiel (J) im kalten Zustand in Eingriff steht.

6. Verfahren nach Anspruch 5, bei dem die Verbindung zwischen einer Lasche (170) des Randabschnitts (154a) des ersten Bauteils (150) und dem Randabschnitt (162a) des zweiten Bauteils (160) derart sichergestellt wird, dass im kalten Zustand die Lasche (170) lokal an den Randabschnitt (162a) des zweiten Bauteils (160) durch elastische Verformung der Lasche angelegt wird.

7. Zusammenbau, umfassend ein erstes Bauteil (50) und ein zweites Bauteil (60), die Stoß an Stoß angeordnet und miteinander im Bereich der jeweiligen im Wesentlichen ringförmigen Randabschnitte (54a, 62a) verbunden sind, wobei die Bauteile aus jeweiligen Materialien mit zueinander unterschiedlichen thermischen Ausdehnungskoeffizienten bestehen, wobei bei dem Zusammenbau:
- das erste Bauteil (50) eine Aufeinanderfolge von biegsamen Laschen (70), die durch Schlitze (72) getrennt und mit dem ersten Bauteil (50) einstückig ausgebildet sind, aufweist,
- Verbindungselemente jeweils eine Lasche (70) des Randabschnitts (54a) des ersten Bauteils (50) mit dem Randabschnitt (62a) des zweiten Bauteils (60) verbinden,
- die Randabschnitte der Bauteile (54a, 62a) miteinander in Eingriff stehen, so dass die Randabschnitte (54a, 62a) im Wesentlichen mit den hohen Temperaturen, die normalerweise während des Betriebs anzutreffen sind, in wechselseitigem Kontakt sind,
**dadurch gekennzeichnet, dass** das erste Bauteil (50) einen Randabschnitt mit einer geringeren Dicke als der Rest des ersten Bauteils hat, und dass die Randabschnitte (54a, 62a) der Bauteile (50, 60) miteinander auf einer Distanz mindestens gleich der Gesamtlänge der Schlitze (70) in Eingriff stehen.

8. Zusammenbau nach Anspruch 7, bei dem die Laschen (70) in dem Randabschnitt (54a) des Bauteils (50) ausgebildet sind, dessen Material den höchsten thermischen Ausdehnungskoeffizienten hat und eine elastische Verformungsfähigkeit aufweist.

9. Zusammenbau nach Anspruch 7, bei dem das erste Bauteil (50) aus Metall und das zweite Bauteil (60) aus einem Verbundstoff mit Keramikmatrix ist.

10. Zusammenbau nach einem der Ansprüche 7 bis 9, bei dem der Randabschnitt (54a) des ersten Bauteils (50) mit dem Randabschnitt (62a) des zweiten Bauteils (60) ohne Spiel und mit Vorspannung im kalten Zustand in Eingriff steht.

11. Zusammenbau nach einem der Ansprüche 7 bis 9, bei dem der Randabschnitt (162a) des zweiten Bauteils (160) mit dem Randabschnitt (154a) des ersten Bauteils (150) mit einem Spiel (J) im kalten Zustand in Eingriff steht.

12. Zusammenbau nach Anspruch 11, bei dem jedes Verbindungselement eine Lasche (170) mit dem Randabschnitt (162a) des zweiten Bauteils (160) verbindet, wobei die Lasche (170) lokal an den Randabschnitt (162a) des zweiten Bauteils (160) angelegt ist.

13. Zusammenbau nach einem der Ansprüche 7 bis 12, bei dem das erste Bauteil (50) und das zweite Bauteil (60) eine Wandstruktur einer Gasturbinenuntereinheit darstellen.

14. Zusammenbau nach einem der Ansprüche 7 bis 12, bei dem das erste Bauteil (50) und das zweite Bauteil (60) einen stromaufwärtigen Wandteil bzw. einen stromabwärtigen Wandteil einer Sekundärdüse eines Flugzeugtriebwerks mit Gasturbine darstellen.

## Claims

1. A method of assembling first (50) and second (60) parts together end to end via respective substantially annular edge portions (54a, 62a), the parts being made of respective materials having different coefficients of thermal expansion, the method comprising the following steps:
• forming in the first part (50), a succession of flexible tongues (70) being separated from one another by slots (72) obtained directly by cutting or machining; and
• the edge portions (54a, 62a) of the two parts (50, 60) being engaged one in the other in such a manner that the edge portions are substantially in mutual contact at the high temperatures normally encountered in operation,
**characterized in that** conferring a thickness to an edge portion (54a) of the first part (50) that is smaller than the thickness of the remainder of the part, and **in that** engaging the edge portions (54a, 62a) of the two parts (50, 60) one in the other over a distance that is not less than the total length of the slots (72), assembling the two parts (50, 60) together by means of fastener elements, each connecting a tongue (70) of the edge portion (54a) of the first part (50) to the edge portion (62a) of the second part (60).

2. A method according to claim 1, wherein the tongues (70) are formed in the edge portion (54a) of the part (50) made of the material having the greater coefficient of thermal expansion and presenting capacity for elastic deformation.

3. A method according to claim 1, wherein the first part (50) is made of metal and the second part (60) is made of a ceramic matrix composite material.

4. A method according to any one of claims 1 to 3, wherein the edge portion (54a) of the first part (50) is engaged on the edge portion (62a) of the second part (60) without clearance and with prestress when cold.

5. A method according to any one of claims 1 to 3, wherein the edge portion (162a) of the second part (160) is engaged on the edge portion (154a) of the first part (150) with clearance (J) when cold.

6. A method according to claim 5, wherein the connection between a tongue (170) of the edge portion (154a) of the first part (150) and the edge portion (162a) of the second part (160) is provided in such a manner as to press the tongue (170) locally when cold against the edge portion (162a) of the second part (160) by elastic deformation of the tongue.

7. An assembly comprising first (50) and second (60) parts disposed end to end and connected together via respective substantially annular edge portions (54a, 62a), the part being made of respective materials having different coefficients of thermal expansion, in which assembly:
• the first part (50) presentes a succession of flexible tongues (70) that are separated by slots (72) and that are formed integrally with the first part (50) ; and
• fastener elements, each connecting a tongue (70) of the edge portion (54a) of the first part (50) to the edge portion (62a) of the second part (60);
• the edge portions of the parts (54a, 62a) being engaged one in the other in such a manner that the edge portions (54a, 62a) are substantially in mutual contact at the high temperatures normally encountered in operation;
**characterized in that** the first part (50) has an edge portion of thickness that is smaller than the thickness of the remainder of the first part and **in that** the edge portions (54a, 62a) of the parts (50, 60) are engaged one in the other over a distance that is not less than the total length of the slots (70).

8. An assembly according to claim 7, wherein the tongues (70) are formed in the edge portion (54a) of the part (50) made of the material that has the greater coefficient of thermal expansion and that presents capacity for elastic deformation.

9. An assembly according to claim 7, wherein the first part (50) is made of metal and the second part (60) is made of a ceramic matrix composite material.

10. An assembly according to any one of claims 7 to 9, wherein the edge portion (54a) of the first part (50) is engaged on the edge portion (62a) of the second part (60) without clearance and with prestress when cold.

11. An assembly according to any one of claims 7 to 9, wherein the edge portion (162a) of the second part (160) is engaged on the edge portion (154a) of the first part (150) with clearance (J) when cold.

12. An assembly according to claim 11, wherein each fastener element connects a tongue (170) to the edge portion (162a) of the second part (160) with the tongue (170) being pressed locally against the edge portion (162a) of the second part (160).

13. An assembly according to any one of claims 7 to 12, wherein the first part (50) and the second part (60) constitutes a wall structure of a subassembly of a gas turbine.

14. An assembly according to any one of claims 7 to 12, wherein the first part (50) and the second part (60) respectively constitute an upstream wall portion and a downstream wall portion of a secondary nozzle of a gas turbine aeroengine.
